# EUROPÄISCHE PATENTSCHRIFT

(11) **EP 3 827 247 B1**
(45) Veröffentlichungstag und Bekanntmachung des Hinweises auf die Patenterteilung: **21.08.2024**
(21) Anmeldenummer: 19752943.1
(22) Anmeldetag: 25.07.2019
(51) Int. Cl.: G01N 21/25, G01N 21/64, G01N 21/31

(54) **VORRICHTUNG FÜR EINE LICHTSPEKTROSKOPISCHE ANALYSE**
APPARATUS FOR A LIGHT SPECTROSCOPIC ANALYIS
DISPOSITIF POUR UNE ANALYSE SPECTROSCOPIQUE DE LA LUMIERE

(30) Priorität: 26.07.2018 DE 102018212489
(43) Veröffentlichungstag der Anmeldung: 02.06.2021
(73) Patentinhaber: Implen GmbH, 81829 München (DE)
(72) Erfinder: SAHIRI, Martin, 85604 Zorneding (DE); RIEPL, Michael, 81541 München (DE)
(74) Vertreter: Hoffmann Eitle
(86) Internationale Anmeldenummer: PCT/EP2019/070044
(87) Internationale Veröffentlichungsnummer: WO 2020/021011

(56) Entgegenhaltungen:
- EP-A2- 0 266 881
- DE-B3- 102012 022 603
- GB-A- 2 351 555
- US-A1- 2010 007 891
- US-A1- 2013 228 675
- US-A1- 2017 030 827

## Beschreibung

### Technisches Gebiet

Die Erfindung betrifft eine Vorrichtung für eine lichtspektroskopische Analyse an einer, beispielsweise flüssigen, Probe, sowie die Verwendung der Vorrichtung und ein korrespondierendes Verfahren.

Insbesondere soll dabei Licht durch eine Probe geführt und anschließend photometrisch, spektralphotometrisch, fluorometrisch, spektralfluorometrisch und/oder mithilfe von Phosphoreszenz oder Lumineszenz detektiert und/oder analysiert werden.

### Stand der Technik

Als eine gattungsgemäße Vorrichtung ist die Vorrichtung gemäß WO 2015/082611 A1 bekannt, die für die lichtspektroskopische Analyse einer kleinen Menge einer flüssigen Probe vorgesehen ist. Die Vorrichtung der WO 2015/082611 A1 umfasst: eine Aufnahmestelle zum Aufbringen einer kleinen Menge der flüssigen Probe, und Lichtleiter, die Licht von einer Lichtquelle zur Probe und Signallicht aus der Probe in Richtung eines Detektors leiten. Ferner zeichnet sich diese Vorrichtung dadurch aus, dass unterhalb der Aufnahmestelle eine Beleuchtungsquelle vorgesehen ist und unter der Aufnahmestelle ein Bereich vorgesehen ist, der für das Licht der Beleuchtungsquelle durchlässig ist, so dass das Beleuchtungslicht die Aufnahmestelle ausleuchtet

GB 2 351 555 A offenbart ein Mehrkanalsystem zur Abbildung von Strahlung, die von Proben an eine lichtempfindliche Erfassungseinrichtung abgegeben wird, mit einer hintergrundreduzierenden Apertur, die die Lichtsammeleigenschaften des optischen Faserbündels erhöht.

DE 10 2012 022603 B3 offenbart eine Anordnung mit zwei optischen Detektoren mit unterschiedlicher räumlichen Auflösung, wobei der Abstand bzw. Anzahl von Messpositionen zwischen dem ersten und dem zweiten Detektor einstellbar ist.

### Gegenstand der Erfindung

Die Erfindung zielt darauf ab, eine Vorrichtung für eine lichtspektroskopische Analyse bereitzustellen, die bei hoher Leistungsfähigkeit in kompakter Weise ausgestaltet ist.

Die Erfindung stellt hierfür eine Vorrichtung mit den Merkmalen gemäß Anspruch 1 bereit. Weitere bevorzugte Ausführungsformen sind in den abhängigen Ansprüchen aufgeführt.

Die Vorrichtung ist für eine lichtspektroskopische Analyse geeignet und hat insbesondere den Vorteil, dass durch den ersten und zweiten Messkopf eine kompakte Anordnung der Vorrichtung erreicht wird. Insbesondere können Verfahrwege verringert werden. Neben einer kompakten Bauform kann ein hohes Maß an Messgenauigkeit gewährleistet werden.

Gemäß einer Ausführungsform ist es bevorzugt, dass die Lichtquelle eine Xenon-Lampe, insbesondere eine Xenon-Blitzlichtlampe aufweist. Somit wird eine qualitativ äußerst hochwertige Analyse gewährleistet.

Es ist bevorzugt, dass der Detektor ein Spektrometer, insbesondere ein Fluoreszenz-Spektrometer oder ein Lumineszenz-Spektrometer, ist. Auch diese Maßnahmen gewährleisten eine äußerst hochwertige Analysemöglichkeit.

Ferner können der erste Messkopf und der zweite Messkopf an einem Schlitten angebracht sein, so dass eine kompakte und strukturell ebenso stabilere wie einfachere Ausgestaltung bereitgestellt wird.

In einer Ausführungsform ist es vorgesehen, dass auch die Lichtquelle und/oder der Detektor am Schlitten angebracht ist/sind. Auf diese Weise kann die Genauigkeit und Stabilität der optischen Ausrichtung dieser Bauteile verbessert und der Bauraum weiter verringert werden.

Es ist bevorzugt, dass die Vorrichtung einen Linearmotor aufweist, um den Schlitten anzutreiben. Dies ermöglicht eine äußerst präzise und vibrationsarme Zustellmöglichkeit zur Bewegung des Schlittens.

In einer Ausführungsform wird eine hängende Ausgestaltung bereitgestellt. Dabei kann der Schlitten ein oder mehrere Führungselemente aufweisen, um den Schlitten hängend zu führen. Somit kann eine Vorrichtung mit äußerst geringen Dimensionen für den praktischen Einsatz zur Analyse bereitgestellt werden.

Der erste Messkopf und der zweite Messkopf sind derart voneinander beabstandet, dass jeweils nur einer der Messköpfe an einer vom Probenträger aufgenommenen Probe eine lichtspektroskopische Analyse durchführen kann. Somit können Fehler bei der Detektion effektiv vermieden werden.

In einer weiteren Variante ist es vorgesehen, dass der erste Messkopf und der zweite Messkopf entlang einer translatorischen Achse bewegbar sind. Weiter bevorzugt ist es vorgesehen, dass der erste Messkopf und der zweite Messkopf entlang einer translatorischen Achse, besonders bevorzugt entlang zweier translatorischer Achsen, bewegbar sind. Somit wird es möglich, mehrere entlang dieser Achse(n) - beispielsweise gitterartig - angeordnete Proben zu analysieren. Auch kann weiterhin eine präzise Verstellbewegung bei einer kostengünstigen Umsetzung gewährleistet werden.

Der erste Messkopf und der zweite Messkopf können an einem gemeinsamen Messkopfträger befestigt sein. Somit wird eine stabile und kompakte Ausgestaltung der Vorrichtung bereitgestellt.

Es ist bevorzugt, dass eine Lichtaustrittsöffnung des ersten Messkopfs und des zweiten Messkopfs, im Betrieb der Vorrichtung, in vertikaler Richtung nach oben weist. Dies ermöglicht, eine besonders ergonomische Vorrichtung auszubilden.

In einer Ausführungsform ist es vorgesehen, dass die Vorrichtung einen Reflektor umfasst, der gegenüber dem Probenträger angeordnet oder positionierbar ist. Durch den entsprechend an der Vorrichtung integrierten Reflektor wird das bereits durch die Probe einmal durchgetretene Anregungslicht zurückreflektiert und ermöglicht aufgrund des erneuten Durchtritts durch die Probe eine höhere Signalausbeute. Auch der in der Probe erzeugte Anteil an Signallicht, der vom Detektor weggerichtet ist, wird zurückreflektiert und kann die Detektionsempfindlichkeit verbessern (z.B. durch ein besseres Signal-Rausch-Verhältnis) Nicht zuletzt ist durch den Reflektor auch eine platzsparende Ausführung möglich.

Der erste Messkopf und/oder der zweite Messkopf ist bzw. sind relativ zum Probenträger bewegbar, um den Abstand zwischen dem ersten Messkopf und/oder dem zweiten Messkopf sowie dem Probenträger zu verändern. Somit kann eine, insbesondere mechanisch betätigte, Fokussierung vorgenommen werden.

In einer weiteren Ausführungsform ist es vorgesehen, dass der Probenträger Probenplätze (Probenaufnahmen) aufweist, außerhalb derer der Probenträger mit einer hydrophoben Beschichtung oder einer aufgedruckten Struktur versehen ist. Diese Beschichtung bzw. Struktur verhindert ein Verlaufen bzw. Abfließen der Probe und es entfällt somit die Notwendigkeit, Vertiefungen für das Halten der Probe in der Probenaufnahme vorzusehen, welche gekrümmte und somit schwer zu handhabende optische Grenzflächen darstellen. Mittels einer hydrophoben Beschichtung bzw. der aufgedruckten Struktur wird auch die mögliche Reinigung der Vorrichtung deutlich erleichtert, so dass Nebenzeiten verringert werden können.

Gemäß einer weiteren Variante umfasst die Vorrichtung einen dritten Messkopf und einen vierten Messkopf. Dabei kann es in einer bevorzugten Variante vorgesehen sein, dass der Probenträger Probenplätze in Matrixanordnung aufweist, beispielsweise eine Matrixanordnung mit 3x5, 4x5 oder 4x6 Probenplätzen. Mit dieser Variante und den genannten Weiterbildungen kann die Leistungsfähigkeit der Vorrichtung nochmals deutlich gesteigert werden. Insbesondere lassen sich in einem Messdurchlauf eine größere Anzahl an Proben analysieren.

Der erste Messkopf und der zweite Messkopf können ein erstes Messkopfpaar ausbilden, und der dritte Messkopf und der vierte Messkopf können ein zweites Messkopfpaar ausbilden. Durch die paarweise Ausgestaltung kann die Komplexität des Systems verringert und eine platzsparende Konfiguration sichergestellt werden.

Bevorzugt sind die Messkopfpaare unabhängig voneinander bewegbar, so dass ein hohes Maß an Flexibilität sichergestellt werden kann.

Für das zweite Messkopfpaar sind bevorzugt eine weitere Lichtquelle und ein weiterer Detektor vorgesehen, so dass eine weitere Möglichkeit zur Auswertung zur Verfügung steht. In einer Ausführungsform kann es vorgesehen sein, dass der dritte Messkopf und der vierte Messkopf entlang einer translatorischen Achse bewegbar sind. Weiter ist bevorzugt, dass der dritte Messkopf und der vierte Messkopf entlang zweier translatorischen Achsen bewegbar sind. Somit kann eine präzise Verstellbewegung bei einer kostengünstigen Umsetzung gewährleistet werden.

Ferner betrifft die Erfindung die Verwendung der Vorrichtung zur Analyse einer oder mehrerer Proben mit den Merkmalen gemäß Anspruch 14.

Die Erfindung ist auch auf ein Verfahren gerichtet, insbesondere ein Verfahren zur lichtspektroskopischen Analyse mit den Merkmalen gemäß Anspruch 15.

Ferner kann es vorgesehen sein, dass nach dem Bewegen des ersten Messkopfs und des zweiten Messkopfs eine Analyse an einer weiteren Probe mit dem ersten Messkopf durchgeführt wird.

### Kurze Beschreibung der Zeichnungen

- Fig. 1: zeigt eine erste Ausführungsform einer Vorrichtung gemäß der Erfindung.
- Fig. 2: ist eine perspektivische Teilansicht der Ausführungsform gemäß Fig. 1.
- Fig. 3: ist eine schematische Ansicht der ersten Ausführungsform der Erfindung zur Erläuterung der Funktionsweise der Vorrichtung.
- Fig. 4: zeigt eine schematische Ansicht einer zweiten Ausführungsform.
- Fig. 5: zeigt eine schematische Draufsicht einer dritten Ausführungsform.

### Beschreibung der bevorzugten Ausführungsform

Nachfolgend werden bevorzugte Ausführungsformen zur Veranschaulichung der Erfindung beschrieben. Auch wenn die beschriebenen Ausführungsformen nicht einschränkend, sondern rein beispielhaft zu verstehen sind, können Merkmale der Ausführungsformen auch einzeln zur Spezifizierung der Erfindung herangezogen werden. Modifikationen bestimmter Merkmale der bevorzugten Ausführungsformen können mit Varianten anderer Merkmale kombiniert werden, um weitere Ausführungsformen auszubilden.

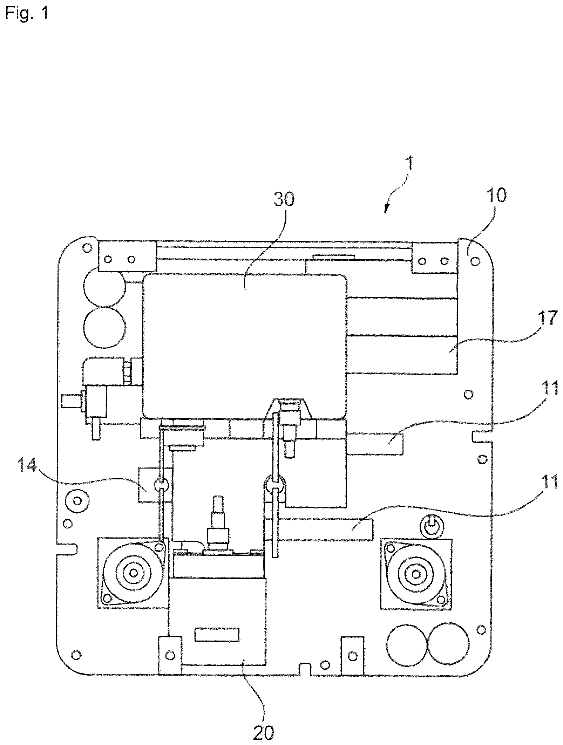

Fig. 1 zeigt eine Ausführungsform einer Vorrichtung 1, die für eine lichtspektroskopische Analyse vorgesehen ist. Dabei wird die Vorrichtung 1 ohne Gehäuse dargestellt, um die Komponenten der Vorrichtung 1 entsprechend anschaulicher erläutern zu können. Zum Schutz der Komponenten der Vorrichtung 1 sind diese jedoch in der praktischen Umsetzung in einem solchen Gehäuse aufgenommen.

Die Vorrichtung 1 umfasst eine Basis 10, die eine obere Seite eines solchen Gehäuses der Vorrichtung darstellt oder benachbart zur oberen Seite innerhalb eines solchen Gehäuses aufgenommen ist. An der nach außen (oben) weisenden Seite der Basis 10 bzw. an der Oberseite des Gehäuses ist ein Probenträger 16 vorgesehen, wobei der Probenträger 16 ein oder mehrere Proben aufnimmt. An der Basis 10 ist eine Stromquelle 17, beispielsweise ein Akku, angeordnet.

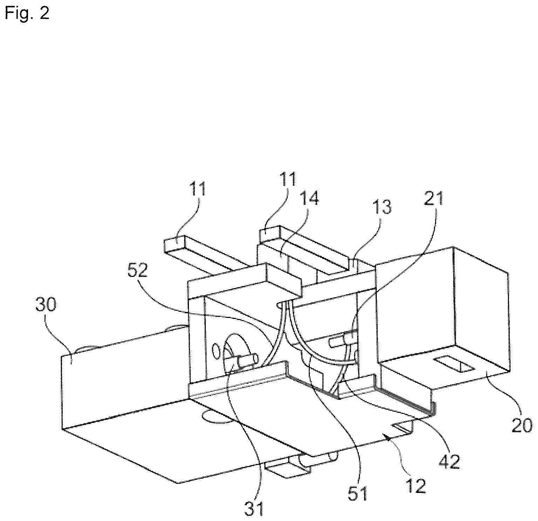

Die Vorrichtung 1 umfasst ferner Schienen 11, entlang derer ein Schlitten 12 bewegbar ist, wobei der Schlitten 12 Führungselemente 13 aufweist, die mit den Schienen 11 in Eingriff stehen (vgl. Fig. 2). Der Schlitten 12 wird dabei in hängender Weise in der Vorrichtung 1 angeordnet und ist, im Gebrauchszustand der Vorrichtung 1, unterhalb der Schienen 11 vorgesehen.

Am Schlitten 12 ist eine Lichtquelle 20 angebracht, die in der vorliegenden Ausführungsform eine Xenon-Blitzlichtlampe ist. Gemäß einer Modifikation der Ausführungsform kann die Lichtquelle 20 auch als LED-Leuchte (vor allem für den VIS und IR-Bereich, aber neuerdings auch UV) oder Deuterium-Lampe (insbesondere für den UV-Bereich) ausgebildet sein. An einer der Lichtquelle 20 gegenüberliegenden Seite des Schlittens 12 ist ein Detektor 30 vorgesehen, der in der vorliegenden Ausführungsform als Spektrometer ausgebildet ist.

Die Lichtquelle 20 dient der Erzeugung eines Lichts, das, wie nachfolgend beschrieben, auf eine Probe ausgestrahlt wird, diese Probe durchdringt und anschließend nach Empfang eines Signallichts, also eines von der Probe kommenden Lichts, vom Detektor analysiert wird.

Hierzu sind mittels eines SMA-Anschlusses 21 eine erste Lichtleitung 41 und eine zweite Lichtleitung 51 mit der Lichtquelle 20 gekoppelt. Die erste Lichtleitung 41 steht mit einem ersten Messkopf 43 in Verbindung, wohingegen die zweite Lichtleitung 51 mit einem zweiten Messkopf 53 gekoppelt ist. Die Messköpfe 43, 53 sind an einem gemeinsamen Messkopfträger 14 angebracht.

Der erste Messkopf 43 und der zweite Messkopf 53 sind gemeinsam entlang des Probenträgers bewegbar. Ferner können die Messköpfe relativ zum Probenträger verstellt werden (Z-Richtung), um die Fokussierung der Messköpfe anzupassen.

Bei den Lichtleitungen 41, 51 handelt es sich um eine Glasfaserleitung, die dazu eingerichtet ist, das von der Lichtquelle 20 ausgegebene Licht zum jeweiligen Messkopf 43, 53 zu leiten.

Der erste Messkopf 43 ist mit einer Signalleitung 42 in Kontakt. Entsprechend ist der zweite Messkopf 53 mit einer zweiten Signalleitung 52 verbunden. Die erste Signalleitung 42 und die zweite Signalleitung 52 sind mittels eines faseroptischen Verbinders 31 mit dem Detektor (Spektrometer) verbunden.

Der Probenträger 16 besteht beispielsweise aus Quarzglas und umfasst mehrere Probenplätze 16a, um eine insbesondere flüssige Probe aufzunehmen. Jeder der Probenplätze 16a ist dabei als für die verwendete Anregungs- und Signalstrahlung durchlässiges Fenster ausgestaltet. In der Darstellung von Figur 1 ist der Probenträger 16 an der nicht dargestellten, den Schienen 11 entgegengesetzten Seite der Basis vorgesehen.

Die Probenplätze 16a sind als Abschnitte am Probenträger 16 vorgesehen. Diese können im Falle eines unbeschichteten Probenträgers durch Näpfchen bzw. Vertiefungen im Probenträger ausgebildet sein. Alternativ können die Probenplätze so definiert werden, dass außerhalb des Probenplatzes der Probenträger 16 mit einer hydrophoben Beschichtung, beispielsweise Silan oder Teflon, oder einer keramischen Oberfläche versehen ist. Auch eine Bedruckung mit Farbe kann die Probenplätze 16a abgrenzen. Somit wird sichergestellt, dass eine Probe im Bereich des jeweiligen Probenplatzes bleibt.

Auf der dem ersten und zweiten Messkopf 43, 53 abgewandten Seite des Probenträgers 16 ist ein Reflektor 15 an der Basis befestigt, der Reflektorabschnitte 15a aufweist, die den Probenplätzen 16a jeweils gegenüberliegen.

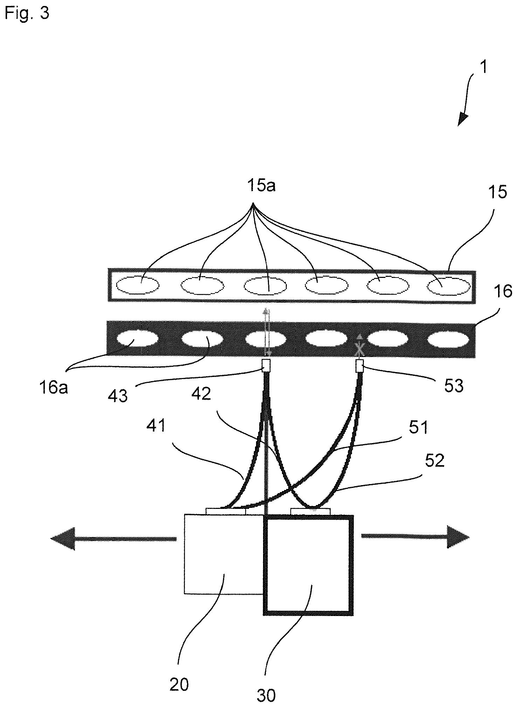

In der schematischen Ansicht von Fig. 3 wird in anschaulicher Weise die Funktionsweise der Vorrichtung 1 dargestellt. Durch die Lichtleitungen 41, 51 gesendetes Anregungslicht wird vom Messkopf 43, 53 durch einen Probenplatz 16a und die darin befindliche Probe geleitet, vom entsprechenden Spiegelabschnitt 15a reflektiert und anschließend erneut durch die Probe geschickt. Bei jedem Durchtritt des Anregungslichts wird die Probe angeregt und zur Erzeugung von Signallicht veranlasst. Dieses Signallicht wird dann wieder vom Messkopf 43, 53 in die Signalfasern 42, 52 eingespeist und weiter zum Detektor 30 geleitet.

Es ist ersichtlich, dass der erste Messkopf 43 und der zweite Messkopf 53 derart voneinander beabstandet sind, dass stets lediglich einer der Messköpfe gegenüberliegend zu einer Öffnung 16a des Probenträgers 16 angeordnet werden kann.

Der Schlitten 12, der die Lichtquelle 20, den Detektor 30, die Lichtleitung 41, 51, die Signalleitungen 42, 52 und die Messköpfe 43, 53 aufnimmt, ist, wie einleitend beschrieben, entlang der Schienen 11 in einer translatorischen Bewegung beweglich.

Die Lichtleitungen 41, 51 und die Signalleitungen 42, 52 sind dabei derart ausgebildet, dass diese in einem bestimmten Biegeradius verformt werden können. Durch den Abstand der Messköpfe 43, 53 ist es vorgesehen, dass der erste Messkopf 43, im Beispiel von Fig. 3, die Probenplätze 16a auf der linken Seite des Probenträgers 16 analysieren kann, wohingegen der zweite Messkopf 53 für die auf der rechten Seite in Fig. 3 angeordneten Probenplätze 16a vorgesehen ist. Somit wird gewährleistet, dass lediglich einer der Messköpfe 43, 53 eine Analyse durchführt.

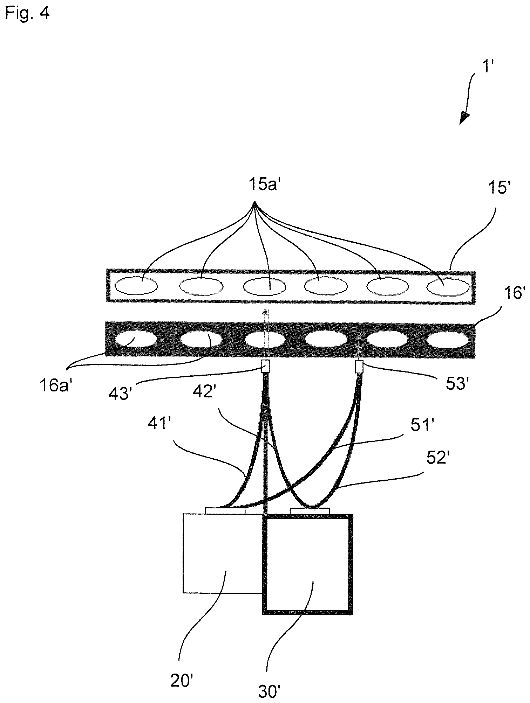

Anhand der schematischen Darstellung von Fig. 4 wird eine zweite Ausführungsform einer Vorrichtung 1` gemäß der Erfindung erläutert. Die Vorrichtung 1' kann wie in Figuren 1-2 dargestellt ausgebildet sein.

Die Vorrichtung 1' weist, wie die erste Ausführungsform, eine Lichtquelle 20' sowie einen Detektor 30' auf. Die Lichtquelle 20` ist mit einer ersten Lichtleitung 41' mit einem ersten Messkopf 43' verbunden sowie mit einer zweiten Lichtleitung 51' mit einem zweiten Messkopf 53`. Ausgehend vom ersten Messkopf 43' ist eine Signalleitung 42' mit dem Detektor 30` in Verbindung. Ebenso ist eine zweite Signalleitung 52' vorgesehen, um den zweiten Messkopf 53' mit dem Detektor 30' zu koppeln.

Ähnlich wie in der ersten Ausführungsform ist ein Probenträger 16' mit Öffnungen 16a' vorgesehen, wobei gegenüber dem Probenträger 16' ein Reflektor 15' mit Reflektorabschnitten 15a` angeordnet werden kann.

Die zweite Ausführungsform unterscheidet sich primär dadurch von der ersten Ausführungsform, dass die Lichtquelle 20' und der Detektor 30` nicht an einem Schlitten angebracht sind, sondern stationär im Gehäuse der Vorrichtung 1` angeordnet sind.

Bezüglich weiterer Merkmale oder detaillierter Ausführungen zu den zur zweiten Ausführungsform genannten Merkmalen wird auf die vorangegangenen Erläuterungen verwiesen.

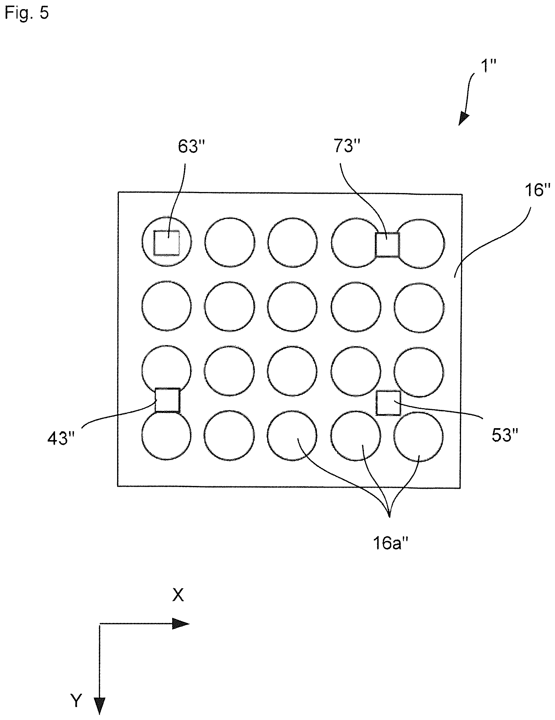

Anhand der in Figur 5 dargestellten Draufsicht einer dritten Ausführungsform wird nachfolgend eine weitere Variante beschrieben.

Die Vorrichtung der dritten Ausführungsform umfasst eine Vielzahl von Probenplätzen 16a", die matrixartig angeordnet sind. Konkret werden 4x5 Probenplätze 16a" bereitgestellt, wobei gemäß weiterer Modifikationen der dritten Ausführungsform auch eine andere Anzahl an Probenplätzen 16a" vorgesehen sein kann, beispielsweise 4x4, 4x6, etc.

Die Vorrichtung der dritten Ausführungsform umfasst vier Messköpfe 43", 53", 63", 73". Die Messköpfe 43", 53", 63 ", 73'' sind miteinander gekoppelt und derart relativ zueinander beabstandet, dass stets lediglich einer der Messköpfe eine an einem Probenplatz 16a " angeordnete Probe erfasst und entsprechend nur dieser Messkopf ein entsprechendes Messsignal ausgibt.

Das erste Messkopfpaar der Probenköpfe 43", 53" sowie das zweite Messkopfpaar der Probenköpfe 63'', 73'' werden durch einen gemeinsamen Schlitten getragen und sind somit in einer Ebene bewegbar, insbesondere in der X-Richtung und der Y-Richtung (siehe auch Figur 5). Ferner können die Messkopfpaare relativ zum Probenträger verstellt werden, um die Fokussierung der Messköpfe zu verändern.

Bezüglich weiterer Merkmale oder detaillierter Ausführungen zu den zur dritten Ausführungsform genannten Merkmalen wird auf die vorangegangenen Ausführungsformen verwiesen.

Gemäß einer Modifikation der dritten Ausführungsform ist es möglich, das erste Messkopfpaar und das zweite Messkopfpaar an separaten Schlitten anzubringen, so dass die Messkopfpaare unabhängig voneinander bewegt werden können. Dies erhöht die Flexibilität der Vorrichtung.

## Patentansprüche

1. Vorrichtung (1, 1', 1") für eine lichtspektroskopische Analyse, umfassend:
einen Probenträger (16, 16', 16") zum Halten einer Probe, wobei der Probenträger (16, 16', 16") Probenplätze (16a, 16a', 16a") aufweist,
eine Basis (10), an der der Probenträger (16, 16', 16") anbringbar oder angebracht ist,
eine Lichtquelle (20) zur Erzeugung eines Lichts, das auf eine Probe ausgestrahlt wird,
einen Detektor (30, 30') zur Analyse eines von der Probe kommenden Lichts,
einen ersten Messkopf (43, 43'), der eingerichtet ist, ein von der Lichtquelle (20, 20') erzeugtes Licht zu einer vom Probenträger (16, 16', 16") aufgenommenen Probe zu leiten und ein Signallicht aus der vom Probenträger (16, 16', 16") gehaltenen Probe aufzunehmen und zu dem Detektor (30, 30') zu leiten,
einen zweiten Messkopf (53, 53'), der eingerichtet ist, ein von der Lichtquelle (20, 20') erzeugtes Licht zu einer vom Probenträger (16, 16', 16") aufgenommenen Probe zu leiten und ein Signallicht aus der vom Probenträger (16, 16', 16") gehaltenen Probe aufzunehmen und zu dem Detektor (30) zu leiten,
wobei der erste Messkopf (43, 43') und der zweite Messkopf (53, 53') an einem gemeinsamen Messkopfträger (14) befestigt sind und relativ zur Basis (10) bewegbar sind,
**dadurch gekennzeichnet, dass** der erste Messkopf (43, 43') und der zweite Messkopf (53, 53`) derart voneinander beabstandet sind, dass jeweils nur einer der Messköpfe gegenüberliegend zu einem Probenplatz (16a, 16a', 16a") des Probenträgers (16, 16', 16'') angeordnet werden kann.

2. Vorrichtung (1, 1', 1") gemäß Anspruch 1, wobei die Lichtquelle (20, 20') eine Xenon-Lampe, insbesondere eine Xenon-Blitzlichtlampe, aufweist.

3. Vorrichtung (1, 1', 1") gemäß einem der vorangegangenen Ansprüche, wobei der Detektor (30, 30') ein Spektrometer, insbesondere ein Fluoreszenz-Spektrometer oder ein Lumineszenz-Spektrometer, ist.

4. Vorrichtung (1, 1', 1") gemäß einem der vorangegangenen Ansprüche, **dadurch gekennzeichnet, dass** die Vorrichtung einen Schlitten (12) aufweist, und dass der erste Messkopf (43, 43') und der zweite Messkopf (53, 53') an dem Schlitten (12) angebracht sind.

5. Vorrichtung (1, 1', 1") gemäß Anspruch 4, **dadurch gekennzeichnet, dass** die Lichtquelle (20, 20') und/oder der Detektor (30, 30') am Schlitten (12) angebracht ist/sind, und/oder
die Vorrichtung einen Linearmotor aufweist, um den Schlitten (12) anzutreiben, und/oder
der Schlitten (12) ein oder mehrere Führungselemente (13) aufweist, um den Schlitten (12) hängend zu führen.

6. Vorrichtung (1, 1', 1") gemäß einem der vorangegangenen Ansprüche, **dadurch gekennzeichnet, dass** der erste Messkopf (43, 43') und der zweite Messkopf (53, 53') entlang einer translatorischen Achse, bevorzugt entlang zweier translatorischer Achsen, bewegbar ist.

7. Vorrichtung (1, 1', 1") gemäß einem der vorangegangenen Ansprüche, **dadurch gekennzeichnet, dass** eine Lichtaustrittsöffnung des ersten Messkopfs (43, 43') und des zweiten Messkopfs (53, 53'), im Betrieb der Vorrichtung (1, 1', 1"), in vertikaler Richtung nach oben weist.

8. Vorrichtung (1, 1', 1") gemäß einem der vorangegangenen Ansprüche, ferner umfassend einen Reflektor (15, 15'), der gegenüber dem Probenträger (16, 16', 16") angeordnet ist oder positionierbar ist.

9. Vorrichtung (1, 1', 1") gemäß einem der vorangegangenen Ansprüche, **dadurch gekennzeichnet, dass** der erste Messkopf (43, 43') und/oder der zweite Messkopf (53, 53') relativ zum Probenträger (16, 16', 16") bewegbar ist, um den Abstand zwischen dem ersten Messkopf (43, 43') und/oder dem zweiten Messkopf (53, 53') sowie dem Probenträger (16, 16', 16") zu verändern, und/oder
der Probenträger (16, 16', 16") außerhalb der Probenplätze (16a, 16a', 16a") mit einer hydrophoben Beschichtung oder einer aufgedruckten Struktur versehen ist.

10. Vorrichtung (1") gemäß einem der vorangegangenen Ansprüche, ferner umfassend einen dritten Messkopf (63") und einen vierten Messkopf (73"), wobei bevorzugt ist, dass der Probenträger (16") Probenplätze (16a") in Matrixanordnung aufweist, weiter bevorzugt eine Matrixanordnung mit 3x5, 4x5 oder 4x6 Probenplätzen (16a").

11. Vorrichtung (1") gemäß Anspruch 10, **dadurch gekennzeichnet, dass** der erste Messkopf (43") und der zweite Messkopf (53") eine erstes Messkopfpaar ausbilden und der dritte Messkopf (63") und der vierte Messkopf (73") ein zweites Messkopfpaar ausbilden, wobei bevorzugt ist, dass die Messkopfpaare unabhängig voneinander bewegbar sind.

12. Vorrichtung (1") gemäß Anspruch 10 oder 11, **dadurch gekennzeichnet, dass** für das zweite Messkopfpaar eine weitere Lichtquelle und ein weiterer Detektor vorgesehen sind.

13. Vorrichtung (1") gemäß einem der Ansprüche 10-12, **dadurch gekennzeichnet, dass** der dritte Messkopf (63") und der vierte Messkopf (73") entlang einer translatorischen Achse, bevorzugt entlang zweier translatorischer Achsen, bewegbar sind.

14. Verwendung einer Vorrichtung (1, 1', 1") gemäß einem der vorangegangenen Ansprüche zur lichtspektroskopischen Analyse von einer oder mehreren Proben.

15. Verfahren zur lichtspektroskopischen Analyse mit einer Vorrichtung (1, 1', 1") gemäß einem der Ansprüche 1-13, umfassend die Schritte:
Analyse einer ersten Probe mit dem ersten Messkopf (43, 43', 43"),
Bewegen des ersten Messkopfs (43, 43', 43") und des zweiten Messkopfs (53, 53', 53"),
Analyse einer zweiten Probe mit dem zweiten Messkopf (53) .

## Claims

1. An apparatus (1, 1', 1'') for light spectroscopic analysis, comprising:
a sample carrier (16, 16', 16'') for holding a sample, wherein the sample carrier (16, 16', 16'') has sample sites (16a, 16a', 16a''),
a base (10) to which the sample carrier (16, 16', 16'') is attachable or attached,
a light source (20) to generate light that is emitted onto a sample;
a detector (30, 30') for the analysis of light coming from the sample,
a first measuring head (43, 43') configured to direct light produced by the light source (20, 20') to a sample held by the sample carrier (16, 16', 16'') and to receive signal light from the sample held by the sample carrier (16, 16', 16'') and to direct it to the detector (30, 30'),
a second measuring head (53, 53') configured to direct light produced by the light source (20, 20') to a sample held by the sample carrier (16, 16', 16'') and to receive signal light from the sample held by the sample carrier (16, 16', 16'') and to direct it to the detector (30);
wherein the first measuring head (43, 43') and the second measuring head (53, 53') are attached to a common measuring head support (14) and are movable relative to the base (10),
**characterized in that** the first measuring head (43, 43') and the second measuring head (53, 53') are spaced from each other in such a way that only one of the measuring heads can be placed opposite to a sample site (16a, 16a', 16a'') of the sample carrier (16, 16', 16'').

2. The apparatus (1, 1', 1'') according to claim 1, wherein the light source (20, 20') has a xenon lamp, in particular a xenon flash lamp.

3. The apparatus (1, 1', 1'') according to one of the preceding claims, wherein the detector (30, 30') is a spectrometer, in particular a fluorescence spectrometer or a luminescence spectrometer.

4. The apparatus (1, 1', 1'') according to one of the preceding claims, **characterized in that** the apparatus has a carriage (12) and that the first measuring head (43, 43') and the second measuring head (53, 53') are attached to the carriage (12).

5. The apparatus (1, 1', 1'') according to claim 4, **characterized in that** the light source (20, 20') and/or the detector (30, 30') is/are attached to the carriage (12), and/or
the apparatus has a linear motor to drive the carriage (12), and/or
the carriage (12) has one or more guide members (13) in order to guide the carriage (12) in a suspended position.

6. The apparatus (1, 1', 1'') according to one of the preceding claims, **characterized in that** the first measuring head (43, 43') and the second measuring head (53, 53') are movable along a translational axis, preferably along two translational axes.

7. The apparatus (1, 1', 1'') according to one of the preceding claims, **characterized in that** a light outlet of the first measuring head (43, 43') and the second measuring head (53, 53') points upwards in a vertical direction during the operation of the apparatus (1, 1', 1").

8. The apparatus (1, 1', 1'') according to one of the preceding claims, further comprising a reflector (15, 15') which is arranged or positionable opposite to the sample carrier (16, 16', 16'').

9. The apparatus (1, 1', 1'') according to any of the preceding claims, **characterized in that** the first measuring head (43, 43') and/or the second measuring head (53, 53') is movable relative to the sample carrier (16, 16', 16'') in order to change the distance between the first measuring head (43, 43') and/or the second measuring head (53, 53') and the sample carrier (16, 16', 16''), and/or
the sample carrier (16, 16', 16'') is provided with a hydrophobic coating or a printed structure outside the sample sites (16a, 16a', 16a'').

10. The apparatus (1'') according to one of the preceding claims, further comprising a third measuring head (63'') and a fourth measuring head (73''), wherein it is preferred that the sample carrier (16'') has sample sites (16a'') in matrix arrangement, further preferably a matrix arrangement with 3x5, 4x5 or 4x6 sample sites (16a").

11. The apparatus (1") according to claim 10, **characterized in that** the first measuring head (43'') and the second measuring head (53 ") form a first pair of measuring heads and the third measuring head (63'') and the fourth measuring head (73'') form a second pair of measuring heads, wherein it is preferred that the measuring head pairs are movable independently of each other.

12. The apparatus (1'') according to claim 10 or 11, **characterized in that** a further light source and a further detector are provided for the second pair of measuring heads.

13. The apparatus (1") according to one of claims 10-12, **characterized in that** the third measuring head (63'') and the fourth measuring head (73'') are movable along one translational axis, preferably along two translational axes.

14. Use of a apparatus (1, 1', 1'') according to one of the preceding claims for light spectroscopic analysis of one or more samples.

15. A method for light spectroscopic analysis by means of an apparatus (1, 1', 1'') according to one of claims 1-13, comprising the steps of:
analysing a first sample with the first measuring head (43, 43', 43''),
moving the first measuring head (43, 43', 43'') and the second measuring head (53, 53', 53''),
analysing a second sample with the second measuring head (53) .

## Revendications

1. Appareil (1, 1', 1'') pour l'analyse par spectroscopie de lumière, comprenant :
un porte-échantillon (16, 16', 16'') pour tenir un échantillon, lorsque le porte-échantillon (16, 16', 16'') a des emplacements d'échantillon (16a, 16a', 16a''),
une base (10) à laquelle le porte-échantillon (16, 16', 16'') est ou peut être fixé,
une source lumineuse (20) pour produire une lumière qui est émise sur un échantillon ;
un détecteur (30, 30') pour l'analyse de la lumière provenant de l'échantillon,
une première tête de mesure (43, 43') destinée à diriger une lumière produite par la source lumineuse (20, 20') vers un échantillon tenu par le porte-échantillon (16, 16', 16'') et à recevoir un signal lumineux de l'échantillon tenu par le porte-échantillon (16, 16', 16") et à le diriger vers le détecteur (30, 30'),
une deuxième tête de mesure (53, 53') destinée à diriger une lumière produite par la source lumineuse (20, 20') vers un échantillon tenu par le porte-échantillon (16, 16', 16'') et à recevoir un signal lumineux de l'échantillon tenu par le porte-échantillon (16, 16', 16'') et à le diriger vers le détecteur (30);
dans lequel la première tête de mesure (43, 43') et la deuxième tête de mesure (53, 53') sont fixées à un support des têtes de mesure commun (14) et sont mobiles par rapport à la base (10),
**caractérisé par le fait que** la première tête de mesure (43, 43') et la deuxième tête de mesure (53, 53') sont espacées l'une de l'autre de telle sorte qu'une seule des têtes de mesure peut être placée en face d'un emplacement d'échantillon (16a, 16a', 16a'') du porte-échantillon (16, 16', 16'').

2. Appareil (1, 1', 1'') selon la revendication 1, dans lequel la source lumineuse (20, 20') est munie d'une lampe au xénon, en particulier d'une lampe flash au xénon.

3. Appareil (1, 1', 1'') selon l'une des revendications précédentes, dans lequel le détecteur (30, 30') est un spectromètre, en particulier un spectromètre à fluorescence ou un spectromètre à luminescence.

4. Appareil (1, 1', 1'') selon l'une des revendications précédentes, **caractérisé en ce que** l'appareil a un chariot (12) et que la première tête de mesure (43, 43') et la deuxième tête de mesure (53, 53') sont fixées au chariot (12).

5. Appareil (1, 1', 1'') selon la revendication 4, **caractérisé en ce que** la source lumineuse (20, 20') et/ou le détecteur (30, 30') est/sont fixés au chariot (12), et/ou
l'appareil est équipé d'un moteur linéaire pour entraîner le chariot (12), et/ou
le chariot (12) comporte un ou plusieurs éléments de guidage (13) afin de guider le chariot (12) en position suspendue.

6. Appareil (1, 1', 1'') selon l'une des revendications précédentes, **caractérisé en ce que** la première tête de mesure (43, 43') et la seconde tête de mesure (53, 53') sont mobiles le long d'un axe de translation, de préférence le long de deux axes de translation.

7. Appareil (1, 1', 1'') selon l'une des revendications précédentes, **caractérisé en ce qu'**une sortie de lumière de la première tête de mesure (43, 43') et de la deuxième tête de mesure (53, 53') pointe vers le haut dans une direction verticale pendant le fonctionnement de l'appareil (1, 1', 1'').

8. Appareil (1, 1', 1'') selon l'une des revendications précédentes, comprenant en outre un réflecteur (15, 15') disposé ou positionnable en face du porte-échantillon (16, 16', 16").

9. Appareil (1, 1', 1") selon l'une quelconque des revendications précédentes, **caractérisé en ce que** la première tête de mesure (43, 43') et/ou la deuxième tête de mesure (53, 53') est mobile par rapport au porte-échantillon (16, 16', 16") afin de modifier la distance entre la première tête de mesure (43, 43') et/ou la deuxième tête de mesure (53, 53') et le porte-échantillon (16, 16', 16''), et/ou
le porte-échantillon (16, 16', 16'') est muni d'un revêtement hydrophobe ou d'une structure imprimée en dehors des emplacements d'échantillon (16A, 16A', 16A").

10. Appareil (1") selon l'une des revendications précédentes, comprenant en outre une troisième tête de mesure (63") et une quatrième tête de mesure (73''), où il est préférable que le porte-échantillon (16") ait des emplacements d'échantillon (16a'') dans une disposition matricielle, de préférence une disposition matricielle avec des positions d'échantillon 3x5, 4x5 ou 4x6 (16a'').

11. Appareil (1") selon la revendication 10, **caractérisé en ce que** la première tête de mesure (43") et la deuxième tête de mesure (53'') forment une première paire de têtes de mesure et que la troisième tête de mesure (63") et la quatrième tête de mesure (73'') forment une deuxième paire de têtes de mesure, étant préférable que les paires de têtes de mesure soient mobiles indépendamment l'une de l'autre.

12. Appareil (1'') selon la revendication 10 ou 11, **caractérisé en ce qu'**une source lumineuse supplémentaire et un détecteur supplémentaire sont fournis pour la deuxième paire de tête de mesure.

13. Appareil (1'') selon l'une des revendications 10-12, **caractérisé en ce que** la troisième tête de mesure (63'') et la quatrième tête de mesure (73'') sont mobiles le long d'un axe de translation, de préférence le long de deux axes de translation.

14. Utilisation d'un appareil (1, 1', 1'') conformément à l'une des revendications précédentes pour l'analyse par spectroscopie de lumière d'un ou plusieurs échantillons.

15. Procédé d'analyse spectroscopique de la lumière à l'aide d'un appareil (1, 1', 1'') selon l'une des revendications 1-13,
comprenant les étapes:
analyse d'un premier échantillon avec la première tête de mesure (43, 43', 43''),
déplacement de la première tête de mesure (43, 43', 43'') et de la seconde tête de mesure (53, 53', 53''),
analyse d'un deuxième échantillon avec la deuxième tête de mesure (53).
